# EUROPEAN PATENT SPECIFICATION

(11) **EP 4 538 092 B1**
(45) Date of publication and mention of the grant of the patent: **26.08.2026**
(21) Application number: 24205497.1
(22) Date of filing: 09.10.2024
(51) Int. Cl.: B60K 35/10, H01H 3/12, H01H 5/04, H01H 13/00, H01H 13/10, H01H 13/26, H01H 9/02

(54) **PUSH-BUTTON SWITCH FOR VEHICLES, IN PARTICULAR FOR VEHICLE DOOR PANELS**
DRUCKKNOPFSCHALTER FÜR FAHRZEUGE, INSBESONDERE FÜR FAHRZEUGTÜRVERKLEIDUNGEN
INTERRUPTEUR À BOUTON-POUSSOIR POUR VÉHICULES, EN PARTICULIER POUR PANNEAUX DE PORTIÈRE DE VÉHICULE

(30) Priority: 13.10.2023 IT 202300021402
(43) Date of publication of application: 16.04.2025
(73) Proprietor: Vimercati S.p.A., 20016 Pero (MI) (IT)
(72) Inventor: BOANO, Marco, 20024 GARBAGNATE MILANESE (MI) (IT)
(74) Representative: Studio Torta S.p.A.

(56) References cited:
- EP-A1- 3 598 469
- DE-T5- 112018 001 484
- DE-U1- 202020 003 884

## Description

### Technical field

The technical field of reference for the present invention is the one relative to push-button switches for vehicles; in particular for vehicle door panels. However, the application of the switch of the present invention can be extended to other positions inside the vehicle. Furthermore, also the reference to the automotive sector is not limiting in a strictly exclusive sense because the switch of the present invention can also be applied to other sectors of the art. The reference to the automotive sector will thus be mentioned in the following for convenience and because it currently corresponds to the sector in which the present invention potentially expresses the greatest advantages.

### State of the art

As is known, in the modern automotive industry, especially in the production of medium-high range vehicles, the need is increasingly felt to make available for the user control devices (switches, selectors and the like) which provide a high-quality perception also with regard to various sensory profiles, such as the tactile, auditory and visual ones. In the passenger compartment of a vehicle, in fact, control devices are normally present utilized directly by the driver or the passengers for performing various functions, which can comprise, just to mention some examples, the actuation of headlights and direction indicators, the turning on and off of courtesy lights, the control of communication and entertainment or air conditioning devices and the setting of navigation systems or the actuation of various devices integrated in the door panels. The research for quality in the feelings perceived by the user in utilizing similar control devices is a factor which guides and determines to a non-negligible extent the development of the components of the automotive sector.

The parameters of the push-button switches to which the user pays particular attention consist in the actuation stroke, which has to be reduced to the minimum, the actuation force threshold, which has to be well calibrated, and the noiselessness which is perceived as a quality indicator of the product because it facilitates and makes pleasant the actuation of the control devices. Noiselessness means the reduction of the noise or sound effect which is generated during the actuation and the release of the switch by effect of the mechanical interaction of moving components of the switch. Furthermore, another fundamental aspect for such switches is the stability, i.e. the fact of reducing to the minimum the clearances present between the movable parts and the fixed ones as well as the ability to always return to the correct actuation position without misalignments.

In such background, Italian patent 102019000016256 by the Applicant deals with the aforementioned problems and offers as solution that of providing a push-button switch structure which allows producing a very short actuation stroke. According to 102019000016256 the push-button switch comprises:
- an actuating button with a substantially flat outer face accessible by the user; wherein the button is movably coupled with respect to a fixed casing along a direction substantially orthogonal to the outer actuating face (during the actuation the button is pressed toward the casing for performing a short penetration stroke and after the actuation it returns to its no-working position);
- a substrate (known as PCB) supporting an electrical circuit housed in the casing on the opposite side of the button;
- a pad made of an elastic polymer material applied to the substrate toward the inside of the casing;
- a reversible snap push-button switch member housed between the pad and the substrate (according to 102019000016256 metallic, shaped as a collapsible dome);
- a slider (or actuator) between the pad and the button actuated by the button inside the casing which is movable between a no-working position and a working position wherein in the working position it actuates the snap of the switch member;
- an actuator member (or presser) in a position aligned with respect to the switch member which according to 102019000016256 is one single piece with the slider;
- a preload device configured to provide a preload force to the slider toward the no-working position.

According to 102019000016256 the slider is shaped as a substantially flat body parallel to the outer face of the button and is hinged at one end to the casing for moving by rotation from the no-working position wherein it is parallel to the substrate, to the working position wherein it is tilted toward the substrate and the actuator member actuates the snap of the switch member.

The advantage of the solution described in 102019000016256 is the lever effect which starting from a stroke of the button toward the substrate multiplies this stroke into a greater stroke of the slider toward the switch member. In fact, the stroke of the button acts on a median position of the slider between the end hinged to the casing and the opposite end which acts via the presser on the switch member. Thanks to the lever effect (hinged end) the stroke of the end of the slider which acts via the presser on the switch member is thus greater than the stroke of the button which acts on the median portion of the slider.

The present invention currently offers further improvements to the structure just described of the push-button switch according to 102019000016256 with the aforementioned advantageous lever effect.

### Description of the invention

The object of the present invention is thus to provide a push-button switch, in particular for vehicle door panels, which on the one hand has a reduced actuation stroke and on the other hand offers a high performance in terms of tactile (stability) and auditory (silence) sensory quality.

According to the present invention, the push-button switch comprises:
- a substantially box-shaped casing open on one side;
- an actuating button coupled to the casing at the open side wherein the button has a substantially flat outer face (freely accessible by the user); wherein the button is movably coupled with respect to the casing along a direction Z substantially orthogonal to the outer actuating face (during the actuation the button is pressed toward the casing for performing a short penetration stroke and after the actuation it returns to its no-working position);
- a substrate supporting an electrical circuit housed in the casing on the opposite side of the button;
- a pad made of an elastic polymer material applied to the substrate inside the casing;
- a reversibly collapsible switch member with snap action and housed between the pad and the substrate;
- an actuator movable inside the casing between the pad and the button, wherein the actuator is actuated by the button for moving from a no-working position wherein it does not act on the switch member to a working position wherein it drives the snap of the switch member;
- a presser in a position aligned with respect to the switch member (made in one single piece with the slider or with the pad).

Unlike the solution described in IT102019000016256, the actuator is not hinged to the casing at an edge thereof so as to leave the actuator with only one degree of freedom (the rotation around the axis of the hinge) but the "hinge" end is coupled to the casing so as to have at least two degrees of freedom, i.e. is configured to:
- rotate around an axis Y passing through one of its edges for moving by rotation from the no-working position wherein it does not actuate the snap of the switch member to the working position wherein the edge opposite the rotation axis is tilted toward the substrate and the actuator member actuates the snap of the switch member;
- slide along at least one direction Y, X in a plane orthogonal to the direction Z for actuating the button, i.e. a plane defined by the rotation axis Y of the actuator and an axis X orthogonal to the rotation axis Y and to the axis Z for actuating the button.

In other words, the "hinge" according to the present invention is no longer fixed with respect to the casing but it is as if it is mounted on a slide movable with respect to the casing along at least one direction X, Y in the plane orthogonal to the direction Z for actuating the button.

According to the present invention, sliding does not mean that the actuator can make important movements, but it means that the end acting as hinge coupled to the casing is not fixed but can make at least small movements inside a housing thereof obtained in the casing (which will be described in the following) and that the coupling between button and actuator has clearances that allow such movements.

Such solution results to be very advantageous. In fact, by "freeing" the hinge of the actuator, the button/actuator assembly is allowed to couple to the casing inside the respective guides without generating antiaesthetic misalignments of the button which can otherwise arise.

Preferably, the actuator, i.e. its movable hinge end, is sliding along the rotation axis Y.

Preferably, the actuator, i.e. its movable hinge end, is sliding along the axis X orthogonal to the rotation axis Y and to the axis Z for actuating the button.

Preferably, the actuator, i.e. its movable hinge end, is sliding both along the rotation axis Y and along the axis X orthogonal to the rotation axis Y and the axis Z for actuating the button.

Preferably, the movable hinge end of the actuator is shaped in a cylindrical form and is housed (with clearance) in an obtained seat of the casing substantially C-shaped with a bottom wall (toward the pad) and a top wall (toward the button) orthogonal to the axis for actuating the button and a side wall parallel to the axis for actuating the button.

Preferably, but not necessarily, the top wall has an extent along the direction X less than the bottom wall.

In order to enable the rotation of the parts, the button comprises two forks extending in the casing toward the actuator along the direction Z and housing two pins protruding laterally from an intermediate portion of the actuator along a direction Y parallel to the direction of rotation so that the actuation of the button drives the rotation of the actuator and the end opposite the hinge performs, by a lever effect, a greater stroke than the button along the direction Z for advancing the button. The coupling of the forks to the pins comprises a clearance based on the diameters between pins and circular seats of the forks.

Preferably the pins develop along the direction Y for a length such to allow the pins to cooperate with guides provided in the inner wall of the casing.

Preferably, according to the present invention, guides are provided for guiding the movement of the button and the movement of the actuator with respect to the casing. Still more preferably, the present invention provides 4 guides (one on each side) for guiding the movement of the button with respect to the casing and 4 guides (one on each side) for guiding the movement of the actuator with respect to the casing.

Preferably, the 4 guides which guide the movement along the direction Z of the button with respect to the casing are made in the form of 4 ribs which extend in the casing toward the actuator along the direction Z housed in corresponding tracks obtained in the inner walls of the casing.

Preferably, 2 guides for guiding the movement along the direction Z of the actuator with respect to the casing are made in the form of tracks obtained in the inner walls of the casing along the direction Z which house the ends of the pins of the actuator protruding beyond the forks of the button.

Preferably, the button comprises at least one window, still more preferably at least 2 or 3 windows, obtained in a portion thereof inside the casing housing at least one corresponding tooth protruding from an inner wall of the casing; wherein tooth and window are configured to allow the movement of the button along the direction Z toward the inside of the casing and lock the button in the risen position after the actuation. The plurality of windows guarantees the stability of the button in its no-working position.

Preferably, the presser is one single piece with the pad and is connected in isolation to the pad via a tilted, thin ring portion configured to bend elastically during the actuation of the button. Such ring portion is a sort of "mini skirt" of the pad which collapses upon the actuation of the button; wherein presser, ring portion and contact pad (if present) are all part of the pad in one single piece.

Preferably, the actuator is made in the shape of a substantially flat body orthogonal to the direction Z possibly provided with at least one wall which develops along the direction Z if it is necessary to channel the light for lighting a possible ideogram on the button.

Preferably, a preload device is provided configured to provide a preload force to the actuator toward the no-working position (so as to bring back also the button into the no-working condition).

Preferably, the switch member can be a collapsible metal dome, a conductive pad possibly directly coupled to the pad toward the substrate PCB.

Preferably, the push-button switch is a multi-function push-button wherein the outer face of the button is divided into a plurality of portions wherein each portion is equipped with devices for selecting a function to be confirmed by actuating the button.

Preferably, the devices for selecting a function are capacitive devices.

### List of the figures

The present invention will now be described with reference to the accompanying drawings, which illustrate some non-limiting example embodiments thereof, wherein:
- Figure 1 is a perspective view of a push-button switch in accordance with the present invention;
- Figure 2 is an exploded view of the assembly of the switch of Figure 1;
- Figure 3 is a section view of the switch of Figure 1;
- Figures 4 and 5 are perspective views of some elements of the assembly of the switch of Figure 1;
- Figure 6 is a perspective view of an element of the assembly of the switch of Figure 1;
- Figure 7 shows a view of a multi-function switch according to the present invention;
- Figures 8 and 9 show some guiding elements provided for guiding the movable parts of the switch inside the casing.

### Description of an embodiment of the invention

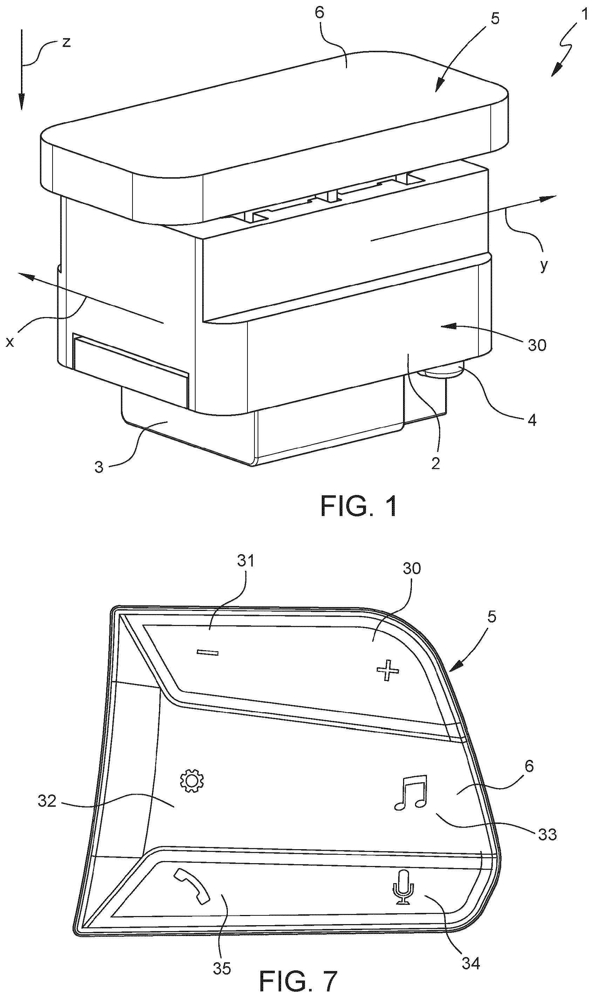

Figure 1 shows a perspective view of an example embodiment of a push-button switch, in particular for vehicle door panels, manufactured in accordance with the present invention. In particular, in Figure 1 an example is visible wherein the switch 1 comprises a box-shaped casing 30 open on one side and a button 5 coupled to the casing at the opening. The casing in Figure 1 comprises a base 3 and a prismatic body 2 coupled to each other with screws 4. The button 5 comprises an outer face 6 which may or may not be substantially flat as necessary, on which the user acts and is movable with respect to the casing. In particular, the button 5 is movable along a direction Z for penetrating the casing (in case of flat outer face 6 the direction Z is orthogonal to the outer face 6 toward the inside of the casing) wherein in the penetrated flattened position actuated by the user it actuates the switch. As is known, the button returns in its no-working position when the user stops acting against it along the direction Z. The directions X and Y indicate two axes orthogonal to the direction Z and, in this example, they correspond to the directions of the long side and of the short side of the casing since the switch has in plan a rectangular shape.

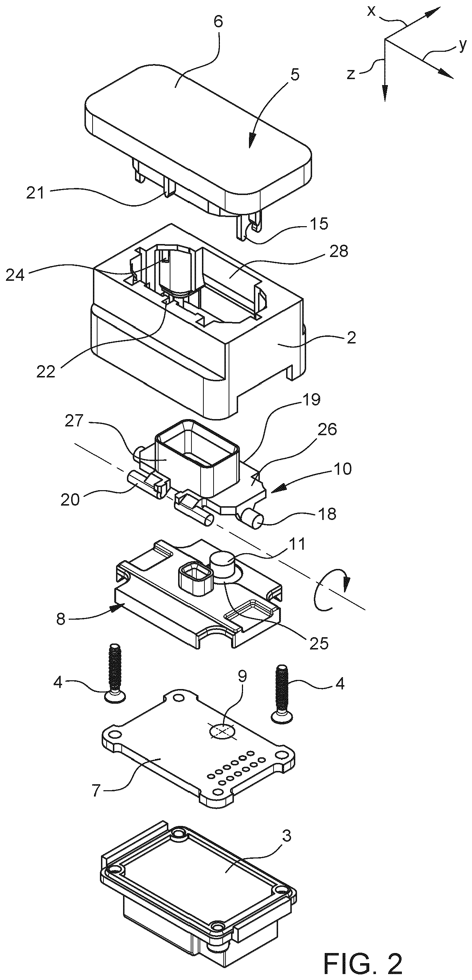

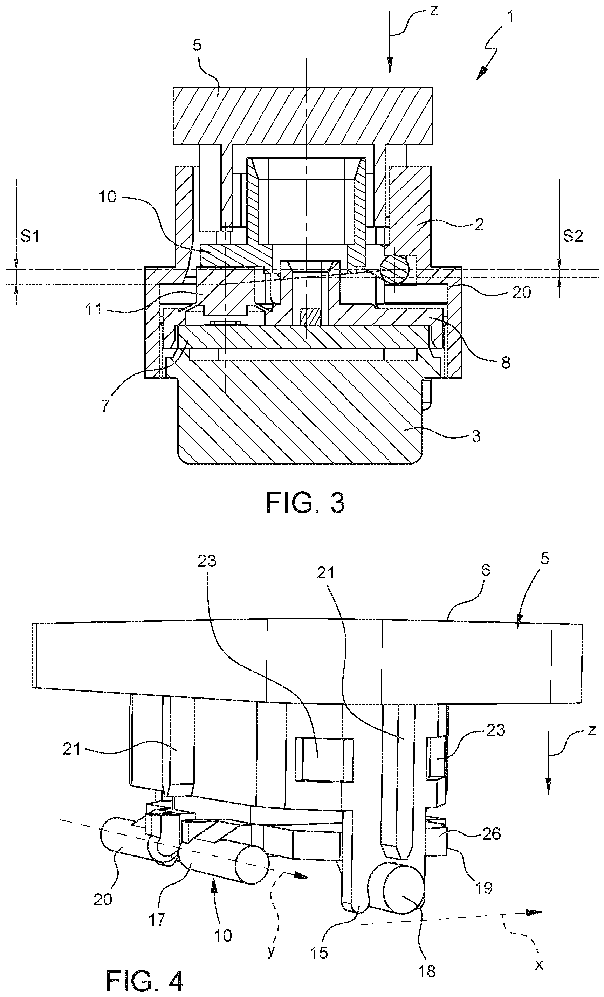

Figure 2 shows an exploded view of the assembly of Figure 1 and allows noting a series of components which are housed in the casing under the button 5. In particular, it is noted that on the base 3 of the casing, a substrate 7 is arranged with the relative electronics and the switch member 9. Above the substrate 7, a pad 8 is arranged which in this example is one single piece with a presser 11 configured to act during the actuation of the assembly against the member 9. In this example, the presser 11 is connected to the rest of the pad via a tilted, thin crown 25 (or mini skirt preferably tilted for example by 25°) so as to make the presser 11 elastic. Above the pad 8, the actuator 10 is present which is directly actuated by the button 5 for acting against the presser 11 and actuating the switch 1. As is visible and as described in the foregoing, the actuator 10 of the present invention is of the type rotatable around an edge 20 thereof so that during the actuation of the button 5 the opposite edge 19 acts against the presser 11. In particular, the button 5 acts against an intermediate portion of the actuator between rotation edge 17 and opposite edge 19 so that by lever effect the edge 19 performs a stroke along the direction Z greater than the stroke of the button 5. Such lever advantage is visible in Figure 3 and is already per se known. In Figure 1, and also in Figure 4, it is visible that the rotation edge 17 of the actuator 10 is shaped in a cylindrical form along the direction Y and that the face of the actuator 10 toward the button 5 comprises vertical walls 21 which couple with guiding functions to obtained grooves 22 of the casing 2. Finally, in Figure 1 and in Figure 4 it is visible that the button 5 has two fork portions 15 which extend along the direction Z and which are configured to house two side pins 18 along the direction Y in the median portion of the actuator 10. The motion along the direction Z is transmitted from the button 5 to the actuator 10 by these forks 15 acting against the pins 18. The button 5 also comprises ribs 21 along the guiding direction Z which slide in grooves 22 obtained in the casing.

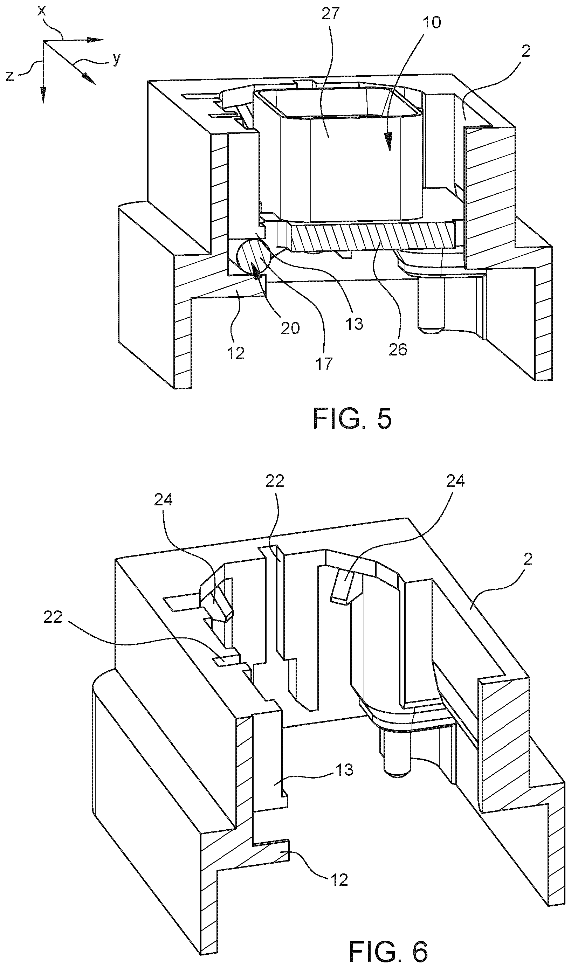

Figure 4 shows the coupling between button 5 and actuator 10. In such figure, windows 23 can be seen, which are obtained in the button which couple to teeth 24 (see Figure 6) for locking the outward excursion thereof. The coupling between the forks 15 and the pins 18 is such that there is a clearance along the diameters of the coupling as well as sliding is possible along the direction Y by virtue of having freed the rotation hinge of the actuator along such direction Y. Such coupling is due to the fact that according to the present invention the rotation edge 20 of the actuator along the direction Y is not fixed with respect to the casing, i.e. is not a hinged edge, but is housed in a movable manner in a seat obtained in the casing.

Figure 5 shows an example of such coupling wherein the actuator 10 is rotatable around the axis Y passing through the edge 20 thereof with respect to the casing but simultaneously it is also movable along the direction X and Y. In fact, in the example of Figure 5 it is evident that the cylindrical edge 20 is housed without constraint in a C-shaped seat with a bottom wall 12 and a top wall 13 orthogonal to the axis Z and a side wall 14 parallel to the axis Z. In this manner the edge 20 represents a sort of hinge along the axis Y for the actuator with respect to the casing 2 which anyway is also free to move along the directions X and Y.

Finally, the figures do not show in detail the actuator member which can be a metal dome as in prior art or a conductive pad element directly coupled to the pad.

Figure 7 shows that the push-button switch of the present invention can also be a multi-function push-button 5 wherein the outer face 6 of the button 5 is divided into a plurality of portions 30, 31, 32, 33, 34, 35 wherein each portion is equipped with devices for selecting a function to be confirmed by actuating the button. Preferably, the devices for selecting a function are capacitive or resistive "touch" devices.

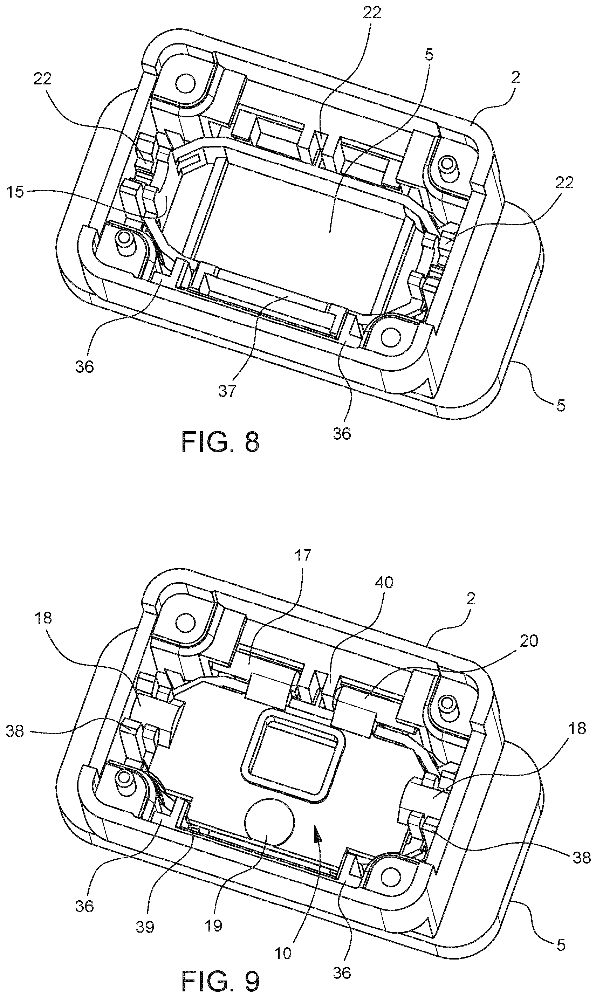

Finally, Figures 8 and 9 show that the switch of the present invention provides a plurality of guides for guiding the movement of the button 5 and the movement of the actuator 10 with respect to the casing 2. In Figure 8, 4 guiding couplings are noted for guiding the movement of the button 5 with respect to the casing **2.** Such couplings are the ribs 21 in the grooves 22 mentioned in the foregoing as well as two walls 36 which act against a step 37 of the button **5. In** Figure 9, 4 guided couplings are noted for guiding the movement of the actuator 10 with respect to the casing **2.** Such couplings are two grooves 38 along the direction Z which house the pins 18, two walls 36 which act against a step 39 of the actuator 10, and a wall 40 which acts on two adjacent ends of two cylindrical portions 20 of the rotation edge 17.

## Claims

1. A push-button switch (1), in particular for vehicle door panels, comprising:
- a casing (2, 3, 4) substantially box-shaped open on one side;
- an actuating button (5) coupled to the casing (2) at the open side; wherein the button (5) comprises an outer actuating face (6); wherein the button (5) is movably coupled with respect to the casing (2) along a direction Z for penetrating into the casing so that during the actuation the button (5) performs a penetration stroke into the casing (2);
- a substrate (7) supporting an electrical circuit housed in the casing (2) on the opposite side of the button (5);
- a pad (8) made of an elastic polymer material applied to the substrate (7) inside the casing (2);
- a reversibly collapsible switch member (9) with snap action and housed between the pad (8) and the substrate (7);
- an actuator (10) movable inside the casing (2) between the pad (8) and the button (5), wherein the actuator (10) is actuated by the button (5) to move from a no-working position wherein it does not act on the switch member (9) to a working position wherein it drives the snap of the switch member (9);
- a presser (11) in a position aligned with respect to the switch member (9);
**characterized in that** the actuator (10) is configured to have at least two degrees of freedom of movement for:
- rotating around an axis Y passing through one of its edges to move by rotation from the no-working position to the working position;
- sliding along at least one direction in a plane orthogonal to the direction Z for actuating the button passing through the rotation axis Y.

2. Switch as claimed in claim 1, wherein the actuator (10) is sliding along the rotation axis Y.

3. Switch as claimed in claim 1, wherein the actuator (10) is sliding along an axis X orthogonal to the rotation axis Y and the axis Z for actuating the button.

4. Switch as claimed in claim 1, wherein the actuator (10) is sliding along the axis Y and along an axis X orthogonal to the rotation axis Y and the axis Z for actuating the button.

5. Switch as claimed in any one of the preceding claims, wherein the rotation edge (17) of the actuator (10) is shaped in a cylindrical form so as to act as a rotation pin and is housed not constrained to the casing in an obtained seat of the casing (2) substantially C-shaped with a bottom wall (12) and a top wall (13) orthogonal to the axis Z and a side wall (14) parallel to the axis Z.

6. Switch as claimed in claim 5, wherein the top wall (13) has an extent along the direction X less than the bottom wall (12).

7. Switch as claimed in any one of the preceding claims, wherein the button (5) comprises two forks (15) having ends shaped as circular seats extending in the casing (2) toward the actuator (10) along the direction Z and housing two pins (18) protruding laterally from an intermediate portion of the actuator (10) along a direction Y so that the actuation of the button (5) drives the rotation of the actuator (10) and the end (19) opposite the rotation edge (20) performs, by a lever effect, a greater stroke than the button (5) along the direction Z.

8. Switch as claimed in claim 7, wherein the coupling of the forks (15) to the pins (18) comprises a clearance on the coupling diameters between pins and circular seats of the forks.

9. Switch as claimed in claim 8, wherein the casing comprises at least one guide, preferably 4 guides one on each side, for guiding the movement of the actuator (10) inside the casing (2).

10. Switch as claimed in claim 9, wherein the guides for guiding the movement of the actuator (10) inside the casing (2) comprise grooves along the direction Z obtained on the inner walls of the casing (2) that house the pins (18) .

11. Switch as claimed in any of the preceding claims, wherein the button (5) comprises at least one guide, preferably 4 guides one on each side, for guiding the movement along the direction Z inside the casing (2).

12. Switch as claimed in claim 11, wherein the guides for guiding the movement of the button along the direction Z inside the casing (2) comprise four ribs (21) extending from the button in the casing (2) toward the actuator (10) along the direction Z that are housed in corresponding grooves (22) along the direction Z obtained in the inner walls of the casing (2).

13. Switch as claimed in any one of the preceding claims, wherein the button (5) comprises at least two windows (23), preferably 3 or four windows, obtained in a portion thereof inside the casing (2) housing at least one corresponding tooth (24) protruding from an inner wall of the casing (2); wherein the tooth and window are configured to allow the movement of the button (5) along the direction Z toward the inside of the casing (2) and lock the button (5) in the risen position after the actuation.

14. Switch as claimed in any of the preceding claims, wherein the presser (11) is one single piece with the pad (8) and is connected in isolation to the rest of the pad (8) via a tilted, thin ring portion (25) configured to bend elastically during the actuation of the button (5).

15. Switch as claimed in any of the preceding claims, wherein the switch member (9) is a collapsible metal dome or a conductive pad possibly directly coupled to the pad (8) toward the substrate (7).

16. Switch as claimed in any of the preceding claims, wherein the push-button switch is a multi-function push-button wherein the outer face (6) of the button (5) is divided into a plurality of portions (29) wherein each portion is equipped with devices for selecting a function (30), for example capacitive or resistive "touch" devices, to be confirmed by actuating the button (5) along the direction Z.

## Patentansprüche

1. Schalter mit Druckknopf (1), insbesondere für Fahrzeugtürverkleidungen, umfassend:
- ein im Wesentlichen kastenförmiges Gehäuse (2, 3, 4), das an einer Seite offen ist;
- einen Betätigungsknopf (5), der mit dem Gehäuse (2) an der offenen Seite gekuppelt ist, wobei der Knopf (5) eine äußere Betätigungsfläche (6) umfasst, wobei der Knopf (5) in Bezug auf das Gehäuse (2) entlang einer Z-Richtung zum Eindringen in das Gehäuse bewegbar gekuppelt ist, sodass der Knopf (5) während der Betätigung einen Eindringhub in das Gehäuse (2) durchführt;
- ein Substrat (7), das eine elektrische Schaltung trägt, die in dem Gehäuse (2) auf der dem Knopf (5) gegenüberliegenden Seite aufgenommen ist;
- ein aus einem elastischen Polymermaterial bestehendes Polster (8), das an dem Substrat (7) im Inneren des Gehäuses (2) angebracht ist;
- ein reversibel zusammenklappbares Schaltelement (9) mit Schnappwirkung, das zwischen dem Polster (8) und dem Substrat (7) aufgenommen ist;
- einen Aktor (10), der im Inneren des Gehäuses (2) zwischen dem Polster (8) und dem Knopf (5) bewegbar ist, wobei der Aktor (10) durch den Knopf (5) betätigt wird, um sich von einer Nichtarbeitsposition, in der er nicht auf das Schaltelement (9) einwirkt, in eine Arbeitsposition, in der er den Schnappvorgang des Schaltelements (9) auslöst, zu bewegen;
- ein Drückelement (11) in einer in Bezug auf das Schaltelement (9) ausgerichteten Position,
**dadurch gekennzeichnet, dass** der Aktor (10) ausgelegt ist, um mindestens zwei Bewegungsfreiheitsgrade aufzuweisen zum:
- Drehen um eine X-Achse herum, die durch eine seiner Kanten verläuft, um sich durch Drehung von der Nichtarbeitsposition in die Arbeitsposition zu bewegen;
- Gleiten entlang mindestens einer Richtung in einer zur Z-Richtung orthogonalen Ebene zum Betätigen des durch die Y-Drehachse verlaufenden Knopfs.

2. Schalter nach Anspruch 1, wobei der Aktor (10) entlang der Y-Drehachse gleitet.

3. Schalter nach Anspruch 1, wobei der Aktor (10) entlang einer X-Achse orthogonal zur Y-Drehachse und der Z-Achse zum Betätigen des Knopfs gleitet.

4. Schalter nach Anspruch 1, wobei der Aktor (10) entlang der Y-Achse und entlang einer X-Achse orthogonal zur Y-Drehachse und der Z-Achse zum Betätigen des Knopfs gleitet.

5. Schalter nach einem der vorhergehenden Ansprüche, wobei die Drehkante (17) des Aktors (10) in einer zylindrischen Form ausgeformt ist, sodass sie als Drehzapfen wirkt, und in einem in dem Gehäuse (2) ausgebildeten, im Wesentlichen C-förmigen Sitz mit einer unterseitigen Wand (12) und einer oberseitigen Wand (13) orthogonal zur Z-Achse und einer Seitenwand (14) parallel zur Z-Achse nicht an dem Gehäuse befestigt aufgenommen ist.

6. Schalter nach Anspruch 5, wobei die oberseitige Wand (13) eine Ausdehnung entlang der X-Richtung aufweist, die kleiner als die unterseitige Wand (12) ist.

7. Schalter nach einem der vorhergehenden Ansprüche, wobei der Knopf (5) zwei Gabeln (15) umfasst, aufweisend Enden, die als kreisförmige Sitze ausgeformt sind, die sich in dem Gehäuse (2) in Richtung des Aktors (10) entlang der Z-Richtung erstrecken und zwei Zapfen (18) aufnehmen, die seitlich von einem Zwischenabschnitt des Aktors (10) entlang einer Y-Richtung hervorstehen, sodass die Betätigung des Knopfs (5) den Aktor (10) in Drehung versetzt und das der Drehkante (20) gegenüberliegende Ende (19) durch einen Hebeleffekt einen größeren Hub als der Knopf (5) entlang der Z-Richtung durchführt.

8. Schalter nach Anspruch 7, wobei das Kuppeln der Gabeln (15) mit den Zapfen (18) ein Spiel an den Kupplungsdurchmessern zwischen Zapfen und kreisförmigen Sitzen der Gabeln umfasst.

9. Schalter nach Anspruch 8, wobei das Gehäuse mindestens eine Führung, vorzugsweise 4 Führungen, jeweils eine auf jeder Seite, zum Führen der Bewegung des Aktors (10) im Inneren des Gehäuses (2) umfasst.

10. Schalter nach Anspruch 9, wobei die Führungen zum Führen der Bewegung des Aktors (10) im Inneren des Gehäuses (2) Nuten entlang der Z-Richtung umfassen, die an den inneren Wänden des Gehäuses (2) ausgebildet sind, die die Zapfen (18) aufnehmen.

11. Schalter nach einem der vorhergehenden Ansprüche, wobei der Knopf (5) mindestens eine Führung, vorzugsweise 4 Führungen, jeweils eine auf jeder Seite, zum Führen der Bewegung entlang der Z-Richtung im Inneren des Gehäuses (2) umfasst.

12. Schalter nach Anspruch 11, wobei die Führungen zum Führen der Bewegung des Knopfs entlang der Z-Richtung im Inneren des Gehäuses (2) vier Rippen (21) umfassen, die sich von dem Knopf in dem Gehäuse (2) in Richtung des Aktors (10) entlang der Z-Richtung erstrecken, die in entsprechenden Nuten (22) entlang der Z-Richtung aufgenommen sind, die in den inneren Wänden des Gehäuses (2) ausgebildet sind.

13. Schalter nach einem der vorhergehenden Ansprüche, wobei der Knopf (5) mindestens zwei Fenster (23), vorzugsweise 3 oder vier Fenster, umfasst, die in einem Abschnitt davon im Inneren des Gehäuses (2) ausgebildet sind und mindestens einen entsprechenden Zahn (24) aufnehmen, der von einer inneren Wand des Gehäuses (2) hervorsteht, wobei der Zahn und das Fenster ausgelegt sind, um die Bewegung des Knopfs (5) entlang der Z-Richtung in Richtung des Inneren des Gehäuses (2) zu ermöglichen und den Knopf (5) nach der Betätigung in der angehobenen Position zu verriegeln.

14. Schalter nach einem der vorhergehenden Ansprüche, wobei das Drückelement (11) einstückig mit dem Polster (8) ausgeführt ist und über einen gekippten dünnen Ringabschnitt (25), der ausgelegt ist, um sich während der Betätigung des Knopfs (5) elastisch zu verbiegen, in Isolation mit dem Rest des Polsters (8) verbunden ist.

15. Schalter nach einem der vorhergehenden Ansprüche, wobei das Schaltelement (9) eine zusammenklappbare Metallkuppel oder ein leitfähiges Polster ist, das gegebenenfalls direkt mit dem Polster (8) in Richtung des Substrats (7) gekuppelt ist.

16. Schalter nach einem der vorhergehenden Ansprüche, wobei der Schalter mit Druckknopf ein Multifunktionsdruckknopf ist, wobei die äußere Fläche (6) des Knopfs (5) in eine Vielzahl von Abschnitten (29) unterteilt ist, wobei jeder Abschnitt mit Vorrichtungen, zum Beispiel kapazitiven oder resistiven "Touch"-Vorrichtungen, zum Auswählen einer Funktion (30), das durch Betätigen des Knopfs (5) entlang der Z-Richtung zu bestätigen ist, ausgestattet ist.

## Revendications

1. Interrupteur (1) à bouton-poussoir, en particulier pour panneaux de portière de véhicule, comprenant :
- un boîtier (2, 3, 4) de forme sensiblement rectangulaire, ouvert d'un côté ;
- un bouton d'actionnement (5) couplé au boîtier (2) au niveau du côté ouvert ; le bouton (5) comprenant une face d'actionnement extérieure (6) ; le bouton (5) étant couplé de manière mobile par rapport au boîtier (2) le long d'une direction Z pour pénétrer dans le boîtier, de sorte que, lors de l'actionnement, le bouton (5) effectue une course de pénétration dans le boîtier (2) ;
- un substrat (7) supportant un circuit électrique logé dans le boîtier (2) du côté opposé au bouton (5) ;
- une plaquette (8) constituée d'un matériau polymère élastique appliqué au substrat (7) à l'intérieur du boîtier (2) ;
- un élément de commutateur (9) repliable de manière réversible à action d'encliquetage et logé entre la plaquette (8) et le substrat (7) ;
- un actionneur (10) mobile à l'intérieur du boîtier (2) entre la plaquette (8) et le bouton (5), l'actionneur (10) étant actionné par le bouton (5) pour passer d'une position de repos, dans laquelle il n'agit pas sur l'élément de commutateur (9), à une position de fonctionnement, dans laquelle il entraîne l'encliquetage de l'élément de commutateur (9) ;
- un presseur (11) dans une position alignée par rapport à l'élément de commutateur (9) ;
**caractérisé en ce que** l'actionneur (10) est configuré pour avoir au moins deux degrés de liberté de mouvement pour :
- tourner autour d'un axe Y passant par l'un de ses bords afin de passer, par rotation, de la position de repos à la position de fonctionnement ;
- coulisser le long d'au moins une direction dans un plan orthogonal à la direction Z afin d'actionner le bouton passant par l'axe de rotation Y.

2. Interrupteur selon la revendication 1, l'actionneur (10) coulissant le long de l'axe de rotation Y.

3. Interrupteur selon la revendication 1, l'actionneur (10) coulissant le long d'un axe X orthogonal à l'axe de rotation Y et à l'axe Z pour actionner le bouton.

4. Interrupteur selon la revendication 1, l'actionneur (10) coulissant le long de l'axe Y et le long d'un axe X orthogonal à l'axe de rotation Y et à l'axe Z afin d'actionner le bouton.

5. Interrupteur selon l'une quelconque des revendications précédentes, le bord de rotation (17) de l'actionneur (10) présentant une forme cylindrique de manière à agir comme un axe de rotation et étant logé, sans être contraint, dans un siège prévu à cet effet du boîtier (2), sensiblement en forme de C, comportant une paroi inférieure (12) et une paroi supérieure (13) orthogonales à l'axe Z et une paroi latérale (14) parallèle à l'axe Z.

6. Interrupteur selon la revendication 5, la paroi supérieure (13) présentant une étendue le long de la direction X inférieure à la paroi inférieure (12)

7. Interrupteur selon l'une quelconque des revendications précédentes, le bouton (5) comprenant deux fourches (15) dont les extrémités sont façonnées en sièges circulaires s'étendant dans le boîtier (2) vers l'actionneur (10) le long de la direction Z et logeant deux broches (18) faisant saillie latéralement à partir d'une partie intermédiaire de l'actionneur (10) dans la direction Y, de sorte que l'actionnement du bouton (5) entraîne la rotation de l'actionneur (10) et que l'extrémité (19) opposée au bord de rotation (20) effectue, par effet de levier, une course plus importante que le bouton (5) le long de la direction Z.

8. Interrupteur selon la revendication 7, l'accouplement des fourches (15) aux broches (18) comportant un jeu sur les diamètres d'accouplement entre les broches et les sièges circulaires des fourches.

9. Interrupteur selon la revendication 8, le boîtier comprenant au moins un guide, de préférence 4 guides, un de chaque côté, destinés à guider le mouvement de l'actionneur (10) à l'intérieur du boîtier (2).

10. Interrupteur selon la revendication 9, les guides destinés à guider le mouvement de l'actionneur (10) à l'intérieur du boîtier (2) comprenant des rainures le long de la direction Z obtenues sur les parois intérieures du boîtier (2), qui logent les broches (18)

11. Interrupteur selon l'une quelconque des revendications précédentes, le bouton (5) comprenant au moins un guide, de préférence 4 guides, un de chaque côté, pour guider le mouvement le long de la direction Z à l'intérieur du boîtier (2).

12. Interrupteur selon la revendication 11, les guides destinés à guider le mouvement du bouton le long de la direction Z à l'intérieur du boîtier (2) comprenant quatre nervures (21) s'étendant du bouton dans le boîtier (2) vers l'actionneur (10) le long de la direction Z, qui sont logées dans des rainures correspondantes (22) le long de la direction Z obtenues dans les parois intérieures du boîtier (2).

13. Interrupteur selon l'une quelconque des revendications précédentes, le bouton (5) comprenant au moins deux fenêtres (23), de préférence 3 ou quatre fenêtres, obtenues dans une partie de celui-ci à l'intérieur du boîtier (2) logeant au moins une dent correspondante (24) faisant saillie à partir d'une paroi interne du boîtier (2) ; la dent et la fenêtre étant configurées pour permettre le déplacement du bouton (5) le long de la direction Z vers l'intérieur du boîtier (2) et pour verrouiller le bouton (5) en position relevée après l'actionnement.

14. Interrupteur selon l'une quelconque des revendications précédentes, le presseur (11) formant une seule pièce avec la plaquette (8) et étant relié de manière isolée au reste de la plaquette (8) par l'intermédiaire d'une partie annulaire mince et inclinée (25) configurée pour se plier élastiquement lors de l'actionnement du bouton (5).

15. Interrupteur selon l'une quelconque des revendications précédentes, l'élément de commutateur (9) étant un dôme métallique repliable ou une plaquette conductrice pouvant être directement couplée à la plaquette (8) vers le substrat (7).

16. Interrupteur selon l'une quelconque des revendications précédentes, l'interrupteur à bouton-poussoir étant un bouton-poussoir multifonction dont la face extérieure (6) du bouton (5) est divisée en une pluralité de parties (29), chaque partie étant équipée de dispositifs permettant de sélectionner une fonction (30), par exemple des dispositifs « tactiles » capacitifs ou résistifs, dont la sélection est validée par l'actionnement du bouton (5) le long de la direction Z.
